# EUROPÄISCHE PATENTSCHRIFT

(11) **EP 2 413 721 B1**
(45) Veröffentlichungstag und Bekanntmachung des Hinweises auf die Patenterteilung: **03.10.2018**
(21) Anmeldenummer: 09775853.6
(22) Anmeldetag: 03.04.2009
(51) Int. Cl.: A23L 13/00, A23L 13/10, A23L 13/40, A23L 13/50, A23L 13/60, A23L 17/00, A23B 4/037

(54) **VERFAHREN ZUR HERSTELLUNG EINES GEFRIERGETROCKNETEN INSTANT-FLEISCHPRODUKTS AUS WENIGSTENS EINEM STÜCK FLEISCH UND GEGEBENENFALLS WEITEREN ZUTATEN**
METHOD FOR MANUFACTURING A FREEZE-DRIED INSTANT MEAT PRODUCT FROM AT LEAST ONE PIECE OF MEAT AND OTHER OPTIONAL INGREDIENTS
PROCÉDÉ DE PRODUCTION D'UN PRODUIT INSTANTANÉ LYOPHILISÉ À BASE DE VIANDE COMPORTANT AU MOINS UN MORCEAU DE VIANDE ET ÉVENTUELLEMENT D'AUTRES INGRÉDIENTS

(43) Veröffentlichungstag der Anmeldung: 08.02.2012
(73) Patentinhaber: Fraunhofer-Gesellschaft zur Förderung der angewandten Forschung e.V., 80686 München (DE)
(72) Erfinder: EISNER, Peter, 85354 Freising (DE); ZACHERL, Christian, 85356 Freising (DE); MÜLLER, Klaus, 85354 Freising (DE); DENKER, Erwin, 82418 Hechendorf-Murnau (DE); GEBHART, Andreas, 85354 Freising (DE)
(74) Vertreter: Wiedemann, Markus
(86) Internationale Anmeldenummer: PCT/DE2009/000432
(87) Internationale Veröffentlichungsnummer: WO 2010/111983

(56) Entgegenhaltungen:
- EP-A1- 1 726 220
- DE-A1- 2 713 707
- DE-A1- 3 107 576
- GB-A- 989 545
- US-A- 3 150 985
- US-A- 4 786 516
- THONGWONG A; FERNANDO L N; GRUN I U; CLARKE A D: "Reduction of warmed-over flavor volatiles from freeze-dried lean beef by supercritical CO2 extraction" JOURNAL OF FOOD SCIENCE, Bd. 64, Nr. 3, 1999, Seiten 387-389, XP002557256 A. D. Clarke, Dep. of Food Sci. & Human Nutr., 21 Agriculture Bldg., Univ. of Missouri-Columbia, Columbia, MO 65211, USA

## Beschreibung

Die Erfindung geht aus von einem Verfahren zur Herstellung eines gefriergetrockneten Instant-Fleischprodukts aus wenigstens einem Stück Fleisch und gegebenenfalls weiteren Zutaten gemäß dem Oberbegriff von Anspruch 1 sowie von einem gefriergetrockneten Instant-Fleischprodukt, welches nach diesem Verfahren hergestellt wurde, gemäß Anspruch 20.

Durch Gefriertrocknung wird frischem Fleisch Wasser entzogen und dabei ein trockenes Instant-Fleischprodukt erzeugt, das nach erneutem Zusatz von Wasser (Rehydrierung) wieder in eine Konsistenz überführt werden kann, die der von frischem Fleisch sehr nahe kommt. Ein solches, auf Fleisch basierendes Trockenprodukt, welches erst nach einer Redydrierung gebrauchsfertig ist, wird im Folgenden als Instant-Fleischprodukt bezeichnet.

Gefriertrockner umfassen eine Trockenkammer, beheiz- und kühlbare Böden oder Horden innerhalb der Trockenkammer, eine Kältemaschine, ein Zwischenventil, eine Vakuumpumpe und Belüftungsventile. Der Prozess der Gefriertrocknung läuft dann wie folgt ab.
Beim Einfrieren wird das in dem zu gefriertrocknenden Objekt enthaltene Wasser vollständig zu Eis gefroren. Durch das Öffnen des Zwischenventils werden Kondensator und Vakuumpumpe für die Haupttrocknung aktiviert. Bei der Haupttrocknung wird das beim Einfrieren entstandene Eis aus dem Objekt entfernt. Durch die Vakuumpumpe wird in der Trockenkammer ein Vakuum erzeugt, durch welches das Wasser sublimiert, d.h. das Wasser geht vom festen Zustand (Eis) in den gasförmigen Zustand über. Durch die Sublimation entweicht das Wasser aus dem Objekt. Die für diese Reaktion benötigte Wärmeenergie wird durch die beheizbaren Böden oder Horden in der Trockenkammer erzeugt. Der entweichende Wasserdampf wandert dann in den durch die Kältemaschine gekühlten Kondensatorraum. Durch die Kälte wird der Wasserdampf zu Eis und schlägt sich an den Wänden des Kondensatorraums nieder. Um zu überprüfen, ob der Vorgang der Haupttrocknung vollständig abgeschlossen ist, wird das Zwischenventil geschlossen. Bleibt während der Schließung des Zwischenventils das Vakuum erhalten, ist die Trocknung vollständig beendet. Ist dagegen noch Feuchtigkeit vorhanden, muss der Vorgang der Haupttrocknung erneut gestartet werden. Im Rahmen der Haupttrocknung ist dann ein Großteil des Wassers aus dem Objekt entfernt worden, welches dann allerdings noch gebundenes Wasser enthalten kann. Dieses gebundene Wasser wird dann im Rahmen einer Nachtrocknung ebenfalls in Gas umgewandelt und entfernt.

Ein gattungsgemäßes Verfahren zum Gefriertrocknen von Hackfleisch ist in der GB 989 545 A beschrieben, wobei dort frisches Hackfleisch und Zutaten wie Zwiebeln, Eier, Tomatenpaste miteinander vermischt und die Mischung dann gefriergetrocknet wird.

Anstatt die Zutaten wie Gewürze direkt in das Hackfleisch einzuarbeiten und dann die Mischung gefrierzutrocknen, ist es in manchen Fällen günstiger, das Fleisch und die Zutaten getrennt voneinander gefrierzutrocknen bzw. lediglich das Fleisch gefrierzutrocknen und Fleisch und Zutaten erst im Laufe der Rehydrierung bzw. im Laufe eines gemeinsamen Garenprozesses miteinander zu mischen.

Dabei kann sich allerdings das Problem ergeben, dass das Fleisch einerseits und die Zutaten andererseits unterschiedliche Zubereitungs- oder Gartemperaturen und Zubereitungs- oder Garzeiten aufweisen können, so dass im Laufe des Zubereitungs- oder Garprozesses entweder Fleisch und Zutaten getrennt voneinander zubereitet werden müssen oder das Fleisch und die Zutaten zusammen, aber dann wenigstens eine der Komponenten nicht unter den ihr zugeordneten optimalen Bedingungen. Dieses Problem betrifft insbesondere fleischbasierte Saucen und Ragouts, insbesondere für Nudelgerichte mit relativ vielen Ausgangsstoffen oder Komponenten wie Fleisch, Tomatenmark, Gewürzen, Nudeln usw., bei welchen die einzelnen Komponenten oftmals unterschiedliche Zubereitungszeiten und -temperaturen aufweisen.

DE-A-27 13 707 beschreibt eine Verwendung eines gefriergetrockneten, vorgekochten Hähnchenwürfels zur Herstellung eines Fleischprodukts. Gemäß EP 1 726 220 A1 wird ein Fleischbrei pasteurisiert und anschließend gefriertrocknet. US 3,150,985 B beschreibt ein Verfahren zur Herstellung eines Instant-Hackfleischprodukts, wobei Hackfleisch frittiert und anschließend gefriergetrocknet wird. US 4,786,516 B beschreibt ein Verfahren zur Herstellung eines Instant-Hackfleischprodukts, bei dem der Wassergehalt des Hackfleischs vor dem Trocknungsschritt durch Vakuum-Frittieren verringert wird. Das Hackfleisch wird dabei zunächst vorerhitzt, in heißem Öl frittiert und anschließend gefriergetrocknet.
Die Aufgabe der vorliegenden Erfindung besteht darin, ein Verfahren zur Herstellung eines gefriergetrockneten Instant-Fleischprodukts der eingangs erwähnten Art bereitzustellen, mit welchen insbesondere Mischungen von Fleisch mit weiteren Zutaten wie fleischbasierte Saucen oder Ragout ökonomisch und schnell zubereit werden können.

### Offenbarung der Erfindung

Die Erfindung basiert auf dem Gedanken, dass das Fleisch vor dem Gefriertrocknen im Rahmen eines Vorgarungsprozesses gekocht, gebrüht, gegart, gebraten oder gebacken und wobei Schweinefleisch und/oder Rinderfleisch und/oder Geflügelfleisch und/oder Fischfleisch verwendet wird, dadurch gekennzeichent, dass vor und/ oder nach dem Vorgarungsprozess wenigstens ein Antioxidanz in eine separate Fettphase oder amphiphile oder lipophile Phase eingebracht wird, welche in Bezug zu dem im Fleisch bereits vorhandenen Ausgangsfettgehalt eine zusätzliche Fettphase darstellt und welche mit dem Fleisch vermischt, in das Fleisch eingearbeitet oder auf das Fleisch aufgebracht wird, so dass ein gefriergetrocknetes Instant-Fleischprodukt hergestellt wird.

Bevorzugt wird der Vorgarungsprozess des Fleischs derart durchgeführt, dass die Kerntemperatur des Fleischs eine Temperatur von mehr als 75°C aufweist. Das Vorgaren des Fleischs bei gefriergetrockneten Instant-Fleischprodukten mit mehreren Inhaltsstoffen wie Fleisch und Zutaten wie einer Gewürzmischung bringt den Vorteil mit sich, dass dann beides, Fleisch und Zutaten die gleiche Zubereitungszeit aufweisen und insbesondere zusammen zubereitet oder gegart werden können. Dementsprechend wird die Vorgarungszeit bzw. die Vorgarungstemperatur des Fleischs vorteilhaft so gewählt, dass die noch notwendige Restgarzeit im rehydrierten Zustand der Gesamtgarungszeit der restlichen Zutaten entspricht. Damit wird eine einfache und schnellstmögliche Zubereitungszeit des rehydrierten Fleischs möglich.
Ein weiterer Vorteil der Vorgarung ist die Energieersparnis durch das beim Vorgaren dem Fleisch bereits entzogene Wasser. Dieses bereits zeitlich vor der Gefriertrocknung aus dem Fleisch entfernte Wasser (je nach Verfahren zwischen 15 Gew.-% bis zu 25 Gew.- %) muss somit nicht mehr über die demgegenüber teurere Gefriertrocknung lyophilisiert oder entfernt werden. Hierbei weisen native und nicht vorgegarte Fleischmassen einen Wassergehalt von 73 Gew.-%, bis 74 Gew.-%, vorgegarte Fleischmassen je nach Vorgarungsverfahren jedoch nur noch zwischen 50 Gew.-% bis 65 Gew.-% an Wassergehalt auf.

Ein weiterer Vorteil des Vorgarungsprozesses ist das weitgehende Denaturieren und Verbleiben der fleischeigenen Proteine innerhalb der Fleischmatrix, was sich positiv auf die sensorischen Eigenschaften und die Qualität des Endproduktes auswirkt.

Das erfindungsgemäße Instant-Fleischprodukt bzw. ein gebrauchs- oder verzehrfertiges Fleisch wird im Einzelnen durch Anwenden des im Folgenden beschriebenen Verfahrens hergestellt:
Als Ausgangsmaterial eignet sich insbesondere Schweine-, Rinder-, Geflügel- und Fischfleisch, getrennt oder als Mischung. Das Fleisch kann vor der Gefriertrocknung mit Gewürzen, Gemüse oder anderen Einlagen vermischt werden. Alternativ werden die Zutaten getrennt vom Fleisch gefriergetrocknet und werden erst bei der Rehydrierung bzw. während der Zubereitung mit diesem vermischt. Dann werden die Zutaten zwar in die gemeinsame Verpackung aber getrennt von dem gefriertrockneten Fleisch gegeben. Die Zutaten oder Zutatenmischung wird dann innerhalb der Verpackung separat abgepackt und liegt nach Rehydrierung und Erhitzung als verzehrfertiges Lebensmittel vor. Optional kann das gefriergetrocknete Fleisch auch zusammen mit der Zutatenmischung in einer gemeinsamen Verpackung verpackt sein.

### Oxidationshemmende Vorbehandlung

Um ein besonders hohes Maß an Nativität (Wasserbindung) der Fleischproteine zu erreichen, wird frisches Fleisch schonend gefriergetrocknet nachdem ihm zuvor wenigstens ein oxidationshemmender Stoff (Antioxidanz) zugesetzt wurde. Ein solchermaßen gefriergetrocknetes Fleisch weist darüber hinaus sehr gute geschmackliche Eigenschaften auf Besondere sensorische Vorteile hinsichtlich Geruch und Geschmack ergeben sich, wenn das Instant-Fleischprodukt möglichst gleichmäßig verteilte Anteile von Antioxidantien, insbesondere in Form von pflanzlichen Extrakten enthält.

Für eine besonders gleichmäßige Verteilung von Antioxidantien oder eines Antioxidanz im oder am Fleisch ist es günstig, dem Fleisch vor dem Gefriertrocknen zusätzlich einen oder mehrere amphiphile oder lipophile Stoffe zuzugeben, so dass das Instant-Hackfleischprodukt auch Anteile derartiger Zusätze enthält Als "lipophil" wird eine Substanz bezeichnet, die sich gut in Fetten oder Ölen lösen kann, Amphiphile Substanzen sind sowohl in Wasser als auch in lipophilen Stoffen zumindest zum Teil löslich.

Üblicherweise werden Fleischprodukten ein Antioxidanz wie beispielsweise Rosmarinextrakt zugegeben, um Oxidationsvorgänge zu reduzieren. Bei Hackfleisch ist jedoch bedingt durch die große Oberfläche des Produktes und die Feinverteilung des oxidationssensiblen Fleischfetts die Verteilung des Antioxidanz sehr schwierig.

Gelöst wird dieses Problem durch eine Verdünnung des Antioxidanz bzw. der Antioxidantien in einer in Bezug zu dem bereits vorhandenen Ausgangsfettgehalt des frischen Fleischs zusätzlich zugegebenen Fettphase, die im Falle von Hackfleisch stufenweise in das Hackfleisch eingearbeitet bzw. mit welche mit größeren Fleischstücken vermischt bzw. auf das oder die Fleischstücke aufgebracht wird.

Dabei zeigt sich, dass das auf diese Weise fein verteilte Antioxidanz direkt an den Fettpartikeln angelagert oder in diese eingebracht wird und somit an den oxidationsempfindlichsten Stellen des Fleisches wirken kann. Bei auf diese Weise produzierten Instant-Fleischprodukten; ist eine verringerte Oxidationsneigung messbar.

Besonders vorteilhaft ist die Verteilung der Antioxidantien oder des Antioxidanz in einer Fettphase mit einem hohen Anteil an gesättigten Fettsäuren. Dadurch kann eine lange Verfügbarkeit des Antioxidanz im Fleisch gewährleistet werden. Es ist auch möglich, amphiphile Stoffe wie Alkohole oder andere Stoffe wie Kombinationen aus Mono-/ Diglyceriden zu verwenden.
Als Antioxidantien können natürliche oder synthetische Stoffe zum Einsatz kommen. Besonders vorteilhaft ist der Einsatz natürlicher Antioxidantien wie Rosmarinextrakt, aplha-Tocopherol und gamma-Tocopherol.

### Vorgaren

Das Vorgaren kann je nach dem gewünschtem Ergebnis gemäß zweier Varianten durchgeführt werden.

### Variante 1 (Hackfleisch)

Den Anforderungen des Endproduktes entsprechendes Hackfleisch oder charakteristisch zerkleinertes Fleisch wird nach der oben beschriebenen antioxidativen Vorbehandlung in geeignete Därme, Hüllen oder Formen gefüllt und bis zum Erreichen des gewünschten Garungspunkts, beispielsweise wenn die Kerntemperatur des Hackfleischs eine Temperatur von mehr als 75°C aufweist, in einer Dampfphase, Heißluft, Wasserbad oder anderen geeigneten Medien gekocht, gebrüht, gegart oder gebacken. Wärmeresistenz und Wasserdurchlässigkeit als Eigenschaft der Därme, Hüllen oder Formen wird hier vorausgesetzt.
Kurz nach dem Vorgarungsprozess wird das noch erhitzte Hackfleisch aus den Därmen ausgebracht, um die durch den Garungsvorgang aneinander gelagerten Partikel mit Hilfe eines Kutters oder anderen geeigneten Gerätschaften vor dem Auskühlen wieder zu trennen.

### Variante 2 (Fleischstücke)

Alternativ zu Variante 1 wird Fleisch nicht als Hackfleisch, sondern in ganzen größeren Stücken verwendet und bis zum gewünschten Vorgarungspunkt in geeigneten Medien gekocht, gebrüht oder gegart werden. Die Stückgröße des Fleischs bleibt gemäß dieser Ausführungsform dann bis zum Verpacken im wesentlichen erhalten.
Alternativ kann nach dem Vorgarungsprozess das Fleisch in entweder noch erhitztem oder bereits abgekühltem Zustand mit Hilfe eines Fleischwolfs, eines Kutters oder anderen geeigneten Gerätschaften auf eine gewünschte, charakteristische Größe oder Körnung zu Hackfleisch zerkleinert werden.

Das Aufbringen oder Einbringen von Antioxidantien (siehe "Oxidationshemmende Vorbehandlung") auf oder in das Fleisch wird in diesem Fall vor der Garung und/oder nach der Zerkleinerung des Fleischs zu Hackfleisch durchgeführt, um die nach der Zerkleinerung neu gebildeten Oberflächen vor Oxidation zu schützen.
Als weitere Alternative können größere Fleischstücke, Hackfleisch oder charakteristisch zerkleinertes Fleisch beispielsweise durch Schmoren oder Braten auf den gewünschten Garungspunkt vorgegart werden. Eine anschließende Zerkleinerung ist dann nicht mehr notwendig. Beim Braten werden große Mengen fleischeigener Proteine aus der Fleischmatrix freigesetzt, deren Denaturierung nun auch außerhalb der Fleischmatrix stattfindet. Dies führt zu einer Grau-Verfärbung der denaturierten Proteine und somit zur Bildung von Trübstoffen, welche im Endprodukt sichtbar bleiben, wie z.B. in Saucen.

### Bilden von Hackfleischformlingen

Besonders bevorzugt wird das Fleisch als vorgegartes und mit Antioxidantien versetzte Hackfleisch weiterverarbeitet und insbesondere im noch nicht gefrorenen Zustand zu Hackfleischformlingen kleinerer Dimensionen geformt.
Denn gemäß der eingangs erwähnten GB 989 545 A werden größere Mengen Hackfleisch, beispielsweise ca. vierzehn Kilo Hackfleisch auf Böden (trays) der Trockenkammer gleichmäßig (evenly) verteilt. Dadurch wird eine relativ große zusammenhängende Masse an Hackfleisch gefriergetrocknet, was eine geringe Gefriertrocknungsgeschwindigkeit nach sich zieht. Um eine für eine Gefriertrocknung im industriellen Rahmen akzeptable Gefriertrocknungsgeschwindigkeit zu erzielen, müsste demnach die für den Gefriertrocknungsprozess eingesetzte Energie wesentlich gesteigert werden, was unwirtschaftlich ist.

Deshalb soll eine Projektionsfläche eines Hackfleischformlings auf einer Horde oder einem Boden der Trockenkammer des Gefriertrockners ein größtes Maß wie einen Durchmesser oder eine Kantenlänge von 2 cm bis 16 cm und in Bezug zur Horde bzw. zum Boden eine größte Höhe von 1 cm bis 4 cm aufweisen.

Unter der Projektionsfläche sind die Umrisse eines Hackfleischformlings zu verstehen, welche entstehen, wenn ein senkrecht zu der den Hackfleischformling lagernden oder aufnehmenden Horde geführter gedachter Stift um den Formling herum geführt und die sich ergebende Umrisslinie auf der Horde angetragen wird.

Beispielsweise können mehr oder weniger regelmäßige quader-, würfel- oder zylinderförmige Formlinge als Ausgangsprodukt für den Gefriertrocknungsprozess hergestellt werden, aber auch Formlinge mit unregelmäßigen Formen, beispielsweise in Form eines Haufens.

Bei Quadern oder Würfeln ist die Projektionsfläche ein Rechteck bzw. ein Quadrat, wobei die größte Kantenlänge des Rechtecks seine Länge ist.

Bei im wesentlichen zylindrischen Hackfleischformlingen, wie sie beispielsweise für Hamburger Pats oder für Frikadellen verwendet werden, ist der Durchmesser der dann kreisförmigen Projektionsfläche heranzuziehen. Denkbar sind aber auch zylindrische längliche und wurstähnliche Formlinge, welche mit ihrer Mantelumfangsfläche auf der Horde oder dem Boden aufliegen, wie beispielsweise Hackfleischwürste für Cevapcici. In diesem Fall wird das größte Maß der Projektionsfläche durch die Länge der zylindrischen Hackfleischrolle in Axialrichtung gebildet.

Nicht zuletzt kommen auch kugelförmige Hackfleischformlinge in Frage, beispielsweise in Form von meat balls oder Polpette, wie sie in oder zusammen mit Spagetti serviert werden. Solche kugelförmigen Strukturen sind bodenseitig dann aufgrund ihrer eher weichen Konsistenz abweichend von einer Kugelform etwas abgeflacht. Als größtes Maß der Projektionsfläche ist dann der Durchmesser der Kugel heranzuziehen.

Insgesamt vorteilhaft ist, dass solche in der Regel industriell gefertigten Hackfleischformlinge bereits vor dem Gefriertrocknen und daher in einer weichen, noch leicht modellier- und gestaltbaren Form in die später der dem Verzehr zugrunde liegende Gestalt gebracht werden können, um dann in dieser Form gefriergetrocknet werden.

Die Hackfleischmasse muss dann nicht im gefriergetrockneten und harten Zustand in Form gebracht werden, wie dies beispielsweise bei der eingangs genannten GB 989 545 A der Fall ist, wo eine relativ große Hackfleischmasse auf den Horden oder Böden plattenförmig verstrichen und die endgültige Form erst nach dem Gefriertrocknen durch Zerkleinern hergestellt werden muss, beispielsweise durch Zersägen.

Bei einem demgegenüber unregelmäßigen Haufen soll, bezogen auf die Projektionsfläche des Haufens auf der Horde, das größte Maß ebenfalls in dem Bereich zwischen 2 cm und 16 cm liegen. Da bei einem solchen Haufen auch der Höhenverlauf unregelmäßig ist, sollte die größte Höhe des Haufens in dem Bereich zwischen 1 cm und 4 cm liegen.

Wesentlich ist dabei, dass zwischen den einzelnen, getrennt voneinander auf den Horden oder auf einer Horde angeordneten Formlingen noch genug Raum oder Platz vorhanden ist, damit das Vakuum bzw. die Wärme an einem möglichst hohen Anteil deren Oberfläche angreifen kann. Da Horden von Gefriertrocknern üblicherweise lochblechartig ausgebildet und demnach mit Durchgangsöffnungen versehen sind, kann die in der Trockenkammer herrschende Atmosphäre die Hackfleischformlinge auch bodenseitig erfassen.

Wenn Hackfleischformlinge derartige Dimensionen beim Gefriertrocknen aufweisen, ergibt sich eine relativ hohe Gefriertrocknungsgeschwindigkeit, wodurch der Gefriertrockungsprozess sehr ökonomisch ablaufen kann. Die gefriergetrockneten Hackfleischformlinge weisen weiterhin eine schnelle Rehydrierbarkeit und sehr gute sensorische Eigenschaften auf.

Wenn die Dimensionen der Hackfleischformlinge im Gefriertrockner kleiner sind und beispielsweise die größte Kantenlänge oder der Durchmesser 2 cm bzw. die größte Höhe 1 cm unterschreitet, so ergibt sich gegenüber erfindungsgemäß dimensionierten Hackfleischformlingen nach dem Gefriertrocknen eine geringere Rehydrierungsgeschwindigkeit. Weiterhin ist auch der Rehydrierungsgrad, d.h. die Fähigkeit der Wasseraufnahme geringer.

Bei größten Kantenlängen bzw. bei Durchmessern von mehr als 16 cm bzw. bei einer größten Höhe von mehr als 4 cm nimmt die Gefriertrocknungsgeschwindigkeit signifikant ab, was in einer unökonomischen Gefriertrocknung resultiert und deshalb unwirtschaftlich ist, wie bereits eingangs erwähnt wurde.

Bezogen auf die Masse derartiger Hackfleischformlinge weist ein solcher vor dem Gefriertrocknen eine Masse in einem Bereich von 5 g bis 1000 g (Gramm) auf.

Noch bessere Eigenschaften hinsichtlich Trocknungsdurchsatz, Rehydrierungsgeschwindigkeit, Rehydrierungsgrad und Produktqualität ergeben sich, wenn die Projektionsfläche des Hackfleischformlings auf der Horde des Gefriertrockners ein größtes Maß wie einen Durchmesser oder eine Kantenlänge von 3 cm bis 5 cm und in Bezug zur Horde eine größte Höhe von 2 cm bis 4 cm aufweist. Die Masse eines solchen Hackfleischformlings liegt dann in einem Bereich von 20 g bis 100 g (Gramm).

Bezogen auf das Massen-Oberflächenverhältnis eines auf der Horde angeordnete Hackfleischformlings vor dem Gefriertrocknen, d.h. auf das Verhältnis seiner Masse zu seiner Oberfläche ist ein Bereich von 1 kg/m² bis 7 kg/m² günstig.

Danach erfolgt ein schnellst mögliches Abkühlen oder Einfrieren des Hackfleischs oder charakteristisch zerkleinerten Fleisches bzw. der Hackfleischformlinge. Hierbei wird ein Abkühlen auf 0°C bis -1°C angestrebt, ein Verfahrensschritt, welcher im Folgenden näher erläutert wird.

### Gefriertrocknen

Die Gefriertrocknung ist eine besonders schonende Trocknungsart, um den Hackfleischformlingen möglichst rasch Wasser zu entziehen. Die Gefriertrocknung oder Lyophilisation oder Sublimationstrocknung ist die Trocknung von Objekten, welche sich üblicherweise in bereits gefrorenem Zustand befinden. Das heißt, dass das wasserhaltige Hackfleisch tiefgefroren wird und anschließend in die Trockenkammer eines Gefriertrockners kommt. Dort wird es einem Unterdruck von weniger als 6 mbar ausgesetzt. Unter dem Einfluss des Unterdrucks nimmt das gefrorene Wasser während des gesamten Trocknungsvorgangs nicht mehr den flüssigen Aggregatzustand ein, sondern geht direkt von Eis in Dampf über (Sublimation).

Als besonders vorteilhaft hat es sich erwiesen, wenn die bevorzugt vorgegarten Hackfleischformlinge nicht in gefrorenem, sondern im teil- oder nicht gefrorenen Zustand in die Trockenkammer des Gefriertrockners gegeben werden, und durch schnelles Erzeugen eines Vakuums in der Trockenkammer den Hackfleischformlingen so viel Energie und Feuchtigkeit zu entziehen, dass sie während des Trocknungsvorgangs tiefgefroren werden.

Dadurch werden zum einen die Proteine im Hackfleisch geschont und die Wasserbindekapazität des trockenen Produkts bleibt besser erhalten, als wenn eine vorherige Tiefgefrierung stattfindet. Zum andern ist eine kürzere Prozess- oder Verarbeitungszeit möglich, weil die übliche Gefrierphase des frischen Hackfleischs in Gefrierräumen/-truhen entfällt. Die dann kürzere Verarbeitungszeit des Hackfleisches vermindert das Wachstum von Mikroorganismen sowie das Auftreten von Oxidationsvorgängen, die zur Ranzigkeit führen können. Außerdem werden farbliche Veränderungen des Trocknungsguts verringert und die Wasserbindung positiv beeinflusst.

Alternativ können die vorgegarten Hackfleischformlinge auch in durchgefrorenem Zustand in die Trockenkammer des Gefriertrockners eingelegt und dann das Vakuum erzeugt werden.

Einen Vorteil bezüglich der Rehydratisierbarkeit bietet die Trocknung und Lagerung bei Restfeuchte- oder Restwassergehalten unter 5 Gew-%, besser unter 3 Gew-%. Dabei zeigte sich, dass die Wasseraufnahme beim Konstituieren bedingt durch einen höheren osmotischen Zug schneller vonstatten geht.

Es zeigte sich auch, dass sich eine Zugabe von 0,5-1,5% Salz (NaCl) vor dem Gefriertrocknen nicht negativ auf die Trocknungsgeschwindigkeit auswirkt, obwohl sich beim Zusetzen von Salz ein höheres Wasserbindevermögen ergibt.

Das durch das beschriebene Verfahren erhaltene gefriergetrocknete Instant-Fleischprodukt ist dann durch die folgenden Eigenschaften gekennzeichnet:
- Der Wassergehalt ist kleiner als 5 Gew-%, insbesondere kleiner als 3 Gew-%,
- der Fleischproteingehalt ist größer als 75 Gew-%, insbesondere größer als 85 Gew-%, bezogen auf die Trockenmasse,
- die Fleischproteine weisen eine derart hohe Nativität auf, dass das trockene Instant-Fleischprodukt soviel Wasser aufnehmen kann, dass der Wassergehalt im rehydrierten Fleisch sogar höher ist als im frischen Fleisch.

Vorteilhaft zeigte sich eine Verpackung der gefriergetrockneten Hackfleischformlinge und gegebenenfalls weiterer Zutaten unter Licht- und CO₂-Ausschluss in einer dampf-, sauerstoff- und lichtdichten Verpackung unter Schutzgasatmosphäre. Besonders vorteilhaft erwies sich die Verpackung in einer Atmosphäre aus 70% N₂ und 30% CO₂.

### Rehydrieren

Bei der Rehydrierung von durch das oben beschriebene Verfahren hergestellten und gefriergetrockneten Hackfleischformlingen war die Wasserbindung so hoch, dass 1% bis 3% mehr Wasser gebunden werden konnte als im ursprünglichen frischen Hackfleisch enthalten war. Trotz des größeren Wassergehalts konnten hinsichtlich haptischer und sensorischer Eigenschaften mit frischem Hackfleisch vergleichbare Produkte erhalten werden.

Die gefriergetrockneten Hackfleischformlinge wurden dazu mit der entsprechenden Menge kaltem Wasser übergossen und erhitzt. Nach etwa 2 Minuten Garen bei 80°C bis 95°C waren sie verzehrfertig. In Kombination mit Würzmischungen als Zutat ist die Zubereitung besonders einfach, was den Einsatz in Großküchen erleichtert.

Es hat sich herausgestellt, dass durch die Kombination des Vorgarungsprozesses mit dem Gefriertrocknen von vorgegarten Hackfleischformlingen in den oben beschriebenen charakteristischen Dimensionen eine vorteilhafte Gesamtwirkung erzielt wird, als durch den Vorgarungsprozess die nach dem Rehydrieren noch notwendige Garzeit herabgesetzt und durch die gewählte Dimensionierung der gefriergetrockneten Hackfleischformlinge eine sehr schnelle Rehydrierbarkeit erreicht wird, so dass sich insgesamt eine geringe Gesamtzubereitungszeit des Instant-Fleischprodukts ergibt, was insbesondere beim Verbraucher die Akzeptanz eines derartigen Instant-Fleischprodukts verbessert.

Es zeigte sich weiterhin, dass bei dem erfindungsgemäßen Instant-Fleischprodukt, das aus frischem Fleisch oder Hackfleisch mit einem Wassergehalt von 68-73% gewonnen wurde, mehr als 75% Wasser eingebunden werden konnte, ohne dass das Wasser aus der rehydrierten Fleischmasse austrat. Aus den rehydrierten Fleischstücken bzw. aus dem Hackfleisch konnten besonders saftige und sensorisch sehr ansprechende Fleischprodukte, wie z.B. fleischbasierte Saucen, Ragouts oder Frikadellen gewonnen werden.

### Beispiel 1

Zur Herstellung von gefriergetrockneten Hackfleischformlingen wurden die folgenden Zutaten als Ausgangsmaterial verwendet:

| | |
|---|---|
| - Frisches Hackfleisch vom Schwein, Kategorie S1 | 100 kg |
| - Antioxidanzmischung: | |
| Pflanzenöl (Sonnenblume) | 900 g |
| Rosmarinextrakt (Carnomaxx) | 40 g |

Lösen der Antioxidanzmischung in einer Fettphase unter 10-minütigem Einrühren bei Raumtemperatur. Einarbeiten der Antioxidanzmischung in 4000 g des Hackfleischs, anschließend mit dem Rest des Hackfleischs vermischen.

Danach wurde das mit Antioxidantien versehene Hackfleisch im Kochkutter im Rückwärtsgang bei 90°C für 20 Minuten vorgegart.

Dann wurde das vorgegarte, frei rollende Hackfleisch auf Horden des Gefriertrockners aufgebracht, wobei Formlinge mit einer größten Kantenlänge von 3 cm bis 5 cm und einer größten Höhe von 2 cm bis 4 cm geformt wurden.

Im Rahmen der anschließenden Gefriertrocknung wurde der Druck in der Trockenkammer von Atmosphärendruck innerhalb von weniger als 10 Minuten auf ca. 1 mbar abgesenkt. Die maximale Heizplattentemperatur betrug 80°C, die Trocknungszeit ca. 8-12 Stunden, wobei die Trockenkammer des Gefriertrockners mit Stickstoff belüftet wurde.

Schließlich wurden die gefriergetrockneten Hackfleischformlinge zusammen mit Gewürzen als Zutat unter Schutzgasatmosphäre verpackt.

### Beispiel 2

Zur Herstellung eines verzehrfertigen Spaghetti-Bolognese-Gerichts wurden folgende Zutaten verwendet:

| | |
|---|---|
| Frisches Hackfleisch vom Schwein, Kategorie S1 | 100g |

**Antioxidanzmischung**

| | |
|---|---|
| Pflanzenöl (Sonnenblume) | 0,9g |
| Rosmarinextrakt (Carnomaxx) | 0,04g |

Lösen der Antioxidanzmischung in einer Fettphase unter 10-minütigem Einrühren bei Raumtemperatur. Einarbeiten der Antioxidanzmischung in 40 g des Hackfleischs, anschließend mit dem Rest des Hackfleischs vermischen.

Danach wurde das mit Antioxidantien versehene Hackfleisch im Kochkutter im Rückwärtsgang bei 90°C für 20 Minuten vorgegart.

Dann wurde das vorgegarte, frei rollende Hackfleisch auf Horden des Gefriertrockners in Form einer losen Schüttung aufgebracht. Im Rahmen der anschließenden Gefriertrocknung wurde der Druck in der Trockenkammer von Atmosphärendruck innerhalb von weniger als 10 Minuten auf ca. 1 mbar abgesenkt. Die maximale Heizplattentemperatur betrug 80°C, die Trocknungszeit ca. 8-12 Stunden, wobei danach die Trockenkammer des Gefriertrockners mit Stickstoff belüftet wurde.

Das gefriergetrocknete Fleisch wurde mit vorgekochten, gefriergetrockneten Spaghetti (185,3g) sowie einer Tomaten-Gewürzmischung (65,6g) vermischt.

Zur Rehydrierung der Trocken-Mischung wurde 800ml kaltes Wasser eingerührt und die Mischung auf 95°C für 5 Minuten erhitzt.

## Patentansprüche

1. Verfahren zur Herstellung eines, gefriergetrockneten Instant-Fleischprodukts aus wenigstens einem Stück Fleisch und gegebenenfalls weiteren Zutaten, wobei wenigstens das Fleisch vor dem Gefriertrocknen im Rahmen eines Vorgarungsprozesses gekocht, gebrüht, gegart, gebraten oder gebacken und Wobei Schweinefleisch und/oder Rinderfleisch und/oder Geflügelfleisch und/oder Fischfleisch verwendet wird, **dadurch gekennzeichnet, dass** vor und/ oder nach dem Vorgarungsprozess wenigstens ein Antioxidanz in eine separate Fettphase oder amphiphile oder lipophile Phase eingebracht wird, welche in Bezug zu dem im Fleisch bereits vorhandenen Ausgangsfettgehalt eine zusätzliche Fettphase darstellt und welche mit dem Fleisch vermischt, in das Fleisch eingearbeitet oder auf das Fleisch aufgebracht wird.

2. Verfahren nach Anspruch 1, **dadurch gekennzeichnet, dass** der Vorgarungsprozess des Fleischs derart durchgeführt wird, dass die Kerntemperatur des Fleischs eine Temperatur von mehr als 75°C aufweist.

3. Verfahren nach einem der vorhergehenden Ansprüche, **dadurch gekennzeichnet, dass** die amphiphile oder lipophile Phase aus Öl, Fett, Alkohol und/oder Kombinationen aus Mono-/Diglyceriden besteht.

4. Verfahren nach Anspruch 3, **dadurch gekennzeichnet, dass** die amphiphile oder lipophile Phase wenigstens einen Anteil an gesättigten Fettsäuren aufweist.

5. Verfahren nach einem der vorhergehenden Ansprüche, **dadurch gekennzeichnet, dass** als Antioxidanz ein natürliches oder ein synthetisches Antioxidanz verwendet wird.

6. Verfahren nach Anspruch 5, **dadurch gekennzeichnet, dass** als natürliches Antioxidanz Rosmarinextrakt und/oder alpha-Tocopherol und/oder gamma- Tocopherol und/oder Vitamin C und/oder Karotin verwendet wird.

7. Verfahren nach einem der vorhergehenden Ansprüche, **dadurch gekennzeichnet, dass** das Fleisch vor oder nach dem Vorgarungsprozess zu Hackfleisch zerkleinert wird.

8. Verfahren nach Anspruch 7, **dadurch gekennzeichnet, dass** das Hackfleisch im Rahmen des Vorgarungsprozesses in Därme, Hüllen oder Formen gefüllt und in einer Dampfphase, Heißluft oder Wasserbad gekocht, gebrüht, gegart, gebraten oder gebacken wird.

9. Verfahren nach Anspruch 7 oder 8, **dadurch gekennzeichnet, dass** das Hackfleisch nach dem Vorgarungsprozess zu wenigstens einem Hackfleischformling geformt wird, wobei eine Projektionsfläche eines Hackfleischformlings auf einer Horde oder auf einem Boden eines Gefriertrockners ein größtes Maß wie einen Durchmesser oder eine Kantenlänge von 2 cm bis 16 cm und in Bezug zur Horde eine größte Höhe von 1 cm bis 4 cm aufweist.

10. Verfahren nach Anspruch 9, **dadurch gekennzeichnet, dass** der auf der Horde angeordnete Hackfleischformling vor dem Gefriertrocknen eine Masse in einem Bereich von 5 g bis 1000 g aufweist.

11. Verfahren nach Anspruch 9, **dadurch gekennzeichnet, dass** eine Projektionsfläche des Hackfleischformlings auf der Horde des Gefriertrockners ein größtes Maß wie einen Durchmesser oder eine Kantenlänge von 3 cm bis 5 cm und in Bezug zur Horde eine Höhe von 2 cm bis 4 cm aufweist.

12. Verfahren nach Anspruch 11, **dadurch gekennzeichnet, dass** der auf der Horde angeordnete Hackfleischformling vor dem Gefriertrocknen eine Masse in einem Bereich von 20 g bis 100 g aufweist.

13. Verfahren nach einem der Ansprüche 9 bis 12, **dadurch gekennzeichnet, dass** der auf der Horde angeordnete Hackfleischformling vor dem Gefriertrocknen ein Massen-Oberflächen-Verhältnis in einem Bereich von 1 kg/m² bis 7 kg/m² aufweist.

14. Verfahren nach einem der Ansprüche 9 bis 13, **dadurch gekennzeichnet, dass** dem Hackfleisch vor dem Formen zu wenigstens einem Hackfleischformling und vor dem Gefriertrocknen 0,5% bis 1,5% Salz zugesetzt werden

15. Verfahren nach einem der Ansprüche 9 bis 14, **dadurch gekennzeichnet, dass** dem Hackfleisch vor dem Formen zu wenigstens einem Hackfleischformling und vor dem Gefriertrocknen Zutaten wie Gewürze, Gemüse oder Einlagen zugesetzt werden.

16. Verfahren nach einem der vorhergehenden Ansprüche, **dadurch gekennzeichnet, dass** das Fleisch vor dem Gefriertrocknen einen Wassergehalt von 68% bis 70% aufweist.

17. Verfahren nach einem der vorhergehenden Ansprüche, **dadurch gekennzeichnet, dass** das Fleisch in nicht gefrorenem oder in gefrorenem Zustand gefriergetrocknet wird,

18. Verfahren nach einem der vorhergehenden Ansprüche, **dadurch gekennzeichnet, dass** die Gefriertrocknung derart durchgeführt wird, dass das Fleisch nach dem Gefriertrocknen einen Feuchtigkeitsgehalt oder Wassergehalt von weniger als 5 Gew-%, insbesondere von weniger als 3 Gew-% aufweist.

19. Verfahren nach einem der vorhergehenden Ansprüche, **dadurch gekennzeichnet, dass** das das gefriergetrocknete Fleisch unter Licht- und Sauerstoffausschluss und Schutzgasatmosphäre in eine dampf-, sauerstoff- und lichtdichte Verpackung verpackt wird.

20. Gefriergetrocknetes Instant-Fleischprodukt, herstellt nach einem Verfahren nach einem der vorhergehenden Ansprüche.

21. Gefriergetrocknetes Instant-Fleischprodukt nach Anspruch 20, **dadurch gekennzeichnet, dass** der Wassergehalt des gefriergetrockneten Fleischs kleiner als 5 Gew-%, insbesondere kleiner als 3 Gew-% ist.

22. Gefriergetrocknetes Instant-Fleischprodukt nach Anspruch 20 oder 21, **dadurch gekennzeichnet, dass** der Fleischproteingehalt des gefriergetrockneten Fleischs größer als 75 Gew-%, insbesondere größer als 85 Gew-% bezogen auf die Trockenmasse ist.

## Claims

1. A method for producing a freeze dried instant meat product comprising at least one piece of meat and optional additional ingredients, wherein at least the meat is cooked, scalded, fried or baked in a precooking process before freeze drying and wherein pork and/or beef and/or poultry and/or fish meat is used,
**characterized in that** at least one antioxidant is introduced into a separate fat phase or amphiphile phase or lipophile phase before and/or after the precooking process which represents an additional fat phase with reference to an initial fat content that is already provided in the meat and which is mixed with the meat, worked into the meat or applied to the meat.

2. The method according to claim 1,
**characterized in that** the precooking of the meat is performed so that a core temperature of the meat exceeds 75° C.

3. The method according to one of the preceding claims,
**characterized in that** the amphiphile phase or the lipophile phase is made from oil, fat, alcohol and/or combinations made from mono-/diglycerides.

4. The method according to claim 3,
**characterized in that** the amphiphile phase or the lipophile phase includes at least a portion of saturated fatty acids.

5. The method according to one of the preceding claims,
**characterized in that** a natural or a synthetic antioxidant is used as the antioxidant.

6. The method according to claim 5,
**characterized in that** rosemary extract and/or alpha tocopherol and/or gamma tocopherol and/or vitamin C and/or keratin is used as a natural antioxidant.

7. The method according to one of the preceding claims,
**characterized in that** the meat is comminuted into minced meat before or after the precooking process.

8. The method according to claim 7,
**characterized in that** the minced meat is filled into guts, shells or molds during the precooking process and cooked, scalded, fried or baked in a vapor phase, hot air or a water bath.

9. The method according to claim 7 or 8,
**characterized in that** the minced meat is formed into at least one minced meat blank after the precooking process wherein a projection surface of the at least one minced meat blank on a rack or a base of a freeze dryer has a maximum dimension of a diameter or of an edge length of 2 cm to 16 cm and with respect to the rack a maximum height of 1 cm to 4 cm.

10. The method according to claim 9,
**characterized in that** minced meat blanks arranged on the rack have a mass in a range of 5 grams to 1000 grams.

11. The method according to claim 9,
**characterized in that** a projection surface of the minced meat blank on the rack of the freeze dryer has a maximum dimension of a diameter or of an edge length of 3 cm to 5 cm and with respect to the rack a height of 2 cm to 4 cm.

12. The method according to claim 11,
**characterized in that** the minced meat blank that is arranged on the rack has a mass in a range of 20 g to 100 g before freeze drying.

13. The method according to one of the claims 9 - 12,
**characterized in that** the minced meat blank that is arranged on the rack has a mass-surface-ratio in a range of 1 kg/m² to 7 kg/m² before freeze drying.

14. The method according to one of the claims 9 - 13,
**characterized in that** 0.5% to 1.5% salt is added to the minced meat before shaping into at least one minced meat blank and before freeze drying.

15. The method according to one of claims 9 - 14,
**characterized in that** ingredients like spices, vegetables or additives are added to the minced meat before shaping into the at least one minced meat blank and before freeze drying.

16. The method according to one of the preceding claims,
**characterized in that** the meat has a water content of 68% to 70% before freeze drying.

17. The method according to one of the preceding method claims,
**characterized in that** the meat is freeze dried in a non-frozen condition or in a frozen condition.

18. The method according to one of the preceding method claims,
**characterized in that** the freeze drying is performed so that the meat has a moisture content or a water content of less than 5% by weight, in particular of less than 3% by weight after the freeze drying.

19. The method according to one of the preceding method claims,
**characterized in that** the freeze dried meat is packaged into a vapor tight, oxygen tight or light tight packaging under an exclusion of light and oxygen in an inert gas atmosphere.

20. A freeze dried instant meat product produced according to a method according to one of the preceding method claims.

21. The freeze dried instant meat product according to claim 20,
**characterized in that** the water content of the freeze dried meat is less than 5% by weight, in particular less than 3% by weight.

22. The freeze dried instant meat product according to claim 20 or 21,
**characterized in that** a meat protein content of the freeze dried meat is more than 75% by weight, in particular more than 85% by weight with reference to a dry mass.

## Revendications

1. Procédé pour la fabrication d'un produit instantané à base de viande lyophilisée à partir d'au moins un morceau de viande et, le cas échéant, d'autres ingrédients, cependant qu'au moins la viande est cuite, bouillie, cuite à la vapeur, poêlée ou cuite au four avant la lyophilisation dans le cadre d'un processus de pré-cuisson et cependant que l'on utilise de la viande de porc et/ou de boeuf et/ou de volaille et/ou de la chair de poisson, **caractérisé en ce qu'**au moins un antioxydant est introduit, avant et/ou après la phase de pré-cuisson, dans une phase lipide ou amphiphile ou lipophile séparée qui constitue une phase lipide supplémentaire par rapport à la teneur en graisse de départ déjà existante dans la viande et qui est mélangé à la viande, incorporé à la viande ou appliqué sur la viande.

2. Procédé selon la revendication 1, **caractérisé en ce que** le processus de pré-cuisson de la viande est exécuté de telle manière que la température à coeur de la viande est une température de plus de 75°C.

3. Procédé selon l'une des revendications précédentes, **caractérisé en ce que** la phase amphiphile ou lipophile est constituée par de l'huile, de la graisse, de l'alcool et/ou des combinaisons de monoglycérides et de diglycérides.

4. Procédé selon la revendication 3, **caractérisé en ce que** la phase amphiphile ou lipophile présente au moins une partie d'acides gras saturés.

5. Procédé selon l'une des revendications précédentes, **caractérisé en ce qu'**un antioxydant naturel ou synthétique est utilisé comme antioxydant.

6. Procédé selon la revendication 5, **caractérisé en ce que** l'on utilise de l'extrait de romarin et/ou de l'alpha-tocophérol et/ou du gamma-tocophérol et/ou de la vitamine C et/ou de la carotène comme antioxydant naturel.

7. Procédé selon l'une des revendications précédentes, **caractérisé en ce que** la viande est broyée en viande hachée avant ou après le processus de pré-cuisson.

8. Procédé selon la revendication 7, **caractérisé en ce que** la viande hachée est farcie dans des boyaux, des enveloppes ou des formes dans le cadre du processus de pré-cuisson et est cuite, bouillie, cuite à la vapeur, poêlée ou cuite au four dans le cadre du processus de pré-cuisson.

9. Procédé selon la revendication 7 ou 8, **caractérisé en ce que** la viande hachée est formée après le processus de pré-cuisson en un ensemble de viande hachée agglomérée, cependant qu'une surface de projection d'un ensemble de viande hachée agglomérée présente, sur une claie ou le fond d'un lyophilisateur une plus grande dimension comme un diamètre ou une longueur d'arête de 2 cm à 16 cm et présente une plus grande hauteur d'1 à 4 cm par rapport à la claie.

10. Procédé selon la revendication 9, **caractérisé en ce que** l'ensemble de viande hachée agglomérée placé sur la claie présente, avant lyophilisation, une masse de l'ordre de 5 à 1000 g.

11. Procédé selon la revendication 9, **caractérisé en ce qu'**une surface de projection de l'ensemble de viande hachée agglomérée sur la claie du lyophilisateur présente une plus grande dimension comme un diamètre ou une longueur d'arête de 3 cm à 5 cm et présente une plus grande hauteur de 2 à 4 cm par rapport à la claie.

12. Procédé selon la revendication 11, **caractérisé en ce que** l'ensemble de viande hachée agglomérée placé sur la claie présente, avant lyophilisation, une masse de l'ordre de 20 à 100 g.

13. Procédé selon l'une des revendications 9 à 12, **caractérisé en ce que** l'ensemble de viande hachée agglomérée placé sur la claie présente, avant lyophilisation, un rapport masse/surface de l'ordre d'1 kg/m² à 7 kg/m².

14. Procédé selon l'une des revendications 9 à 13, **caractérisé en ce que** 0,5% à 1,5% de sel est ajouté à la viande hachée avant de la former en au moins un ensemble de viande hachée agglomérée et avant lyophilisation.

15. Procédé selon l'une des revendications 9 à 14, **caractérisé en ce que** des ingrédients comme des épices, des légumes ou des additifs sont ajoutés à la viande hachée avant de la former en au moins un ensemble de viande hachée agglomérée et avant lyophilisation.

16. Procédé selon l'une des revendications précédentes, **caractérisé en ce que** la viande présente, avant lyophilisation, une teneur en eau de 68% à 70%.

17. Procédé selon l'une des revendications précédentes, **caractérisé en ce que** la viande est lyophilisée à l'état non congelé ou à l'état congelé.

18. Procédé selon l'une des revendications précédentes, **caractérisé en ce que** la lyophilisation est exécutée de telle manière que la viande présente, après lyophilisation, une teneur en humidité ou une teneur en eau inférieure à 5% en poids, en particulier inférieure à 3% en poids.

19. Procédé selon l'une des revendications précédentes, **caractérisé en ce que** la viande lyophilisée est emballée en l'absence de lumière et d'oxygène et en atmosphère inerte dans un emballage étanche à la vapeur, à l'oxygène et à la lumière.

20. Produit instantané à base de viande lyophilisée fabriqué selon un procédé selon l'une des revendications précédentes.

21. Produit instantané à base de viande lyophilisée fabriqué selon la revendication 20, **caractérisé en ce que** la teneur en eau de la viande lyophilisée est inférieure à 5% en poids, en particulier inférieure à 3% en poids.

22. Produit instantané à base de viande lyophilisée fabriqué selon la revendication 20 ou 21, **caractérisé en ce que** la teneur en protéines de la viande lyophilisée est supérieure à 75% en poids, en particulier supérieur à 85% en poids sur matière sèche.
